# EUROPÄISCHE PATENTSCHRIFT

(11) **EP 0 870 706 B1**
(45) Veröffentlichungstag und Bekanntmachung des Hinweises auf die Patenterteilung: **18.06.2003**
(21) Anmeldenummer: 98810195.2
(22) Anmeldetag: 09.03.1998
(51) Int. Cl.: B65G 69/28, B60P 1/43, B60P 3/06

(54) **Ladefläche eines Nutzfahrzeuges mit Verladeschiene/n**
Loading floor of a commercial vehicle with loading ramp(s)
Plateau de chargement d'un véhicule utilitaire avec rampe(s) de chargement

(30) Priorität: 24.03.1997 DE 19712316
(43) Veröffentlichungstag der Anmeldung: 14.10.1998
(73) Patentinhaber: Alcan Technology & Management AG, 8212 Neuhausen am Rheinfall (CH)
(72) Erfinder: Borghardt, Detlef, 78315 Radolfzell (DE); Kemen, Hans-Jörgen, 78224 Singen (DE)

(56) Entgegenhaltungen:
- CH-A- 685 551
- DE-A- 4 318 952
- US-A- 3 977 545
- US-A- 5 347 672
- US-A- 5 570 989

## Beschreibung

Die Erfindung betrifft eine Ladefläche eines Nutzfahrzeuges mit wenigstens einer einends an ihr abstützbarer Verladeschiene als Auffahrhilfe für Lasten nach dem Oberbegriff des Patentanspruches 1.

Verladeschienen für Kleinfahrzeuge sind beispielsweise aus dem Prospekt der Firma Altec GmbH, 78224 Singen, 1989, bekannt und werden entweder an der Ladefläche angelenkt oder auf dieser lose mitgeführt sowie zur Gebrauchsstellung mittels Haken od. dgl. Verbindungselementen geneigt angeschlossen. Der DE-C-42 34 592 ist ein Auffahrprofil für Kleinfahrzeuge mit zwischen einem Fahrgrund und einer Ladefläche geneigt verlaufendem Auffahrarm zu entnehmen, das mit einem Neigungsmesser für die jeweilige Neigungslage versehen ist.

Die DD 216 203 A1 beschreibt ein Kippfahrzeug zum Entladen von Stückgut mittels einer schiefen Ebene; der kippbare Aufsatz des Fahrzeugs weist einen doppelten Boden auf, indem ein ausziehbares, auf Rollen verfahrbares Gleitblech lagert, wobei sich unter dem Gleitblech herausziehbare Abstützschienen mit am freien Ende befestigten Laufrädern befinden. An der Vorderseite des doppelten Bodens ist eine Seilwinde angebracht und deren Zugseil mit dem Gleitblech verbunden.

Die US-A-5,570,989 beschreibt eine ausziehbare Verladeschiene eines Lastkraftwagens, welche mit auf einer Führungsbahn geführten Rollen versehen ist. Die Führungsbahn wird aus Profilen mit Führungsflächen gebildet und ist unterhalb der Ladefläche angebracht, so dass sich die Verladeschiene unterhalb der Ladefläche verstauen lässt.

Als nachteilig hat sich bei den auf dem Markt befindlichen Verladeschienen sowohl ihr komplizierter Einsatz als auch ihre Unterbringung außer Gebrauch erwiesen, weshalb sich der Erfinder das Ziel gesetzt hat, die eingangs beschriebene Einheit aus Ladefläche und Verladeschiene/n zu verbessern sowie eine problemlose Unterbringung samt leichter Handhabung zu ermöglichen. Dazu soll die Ladefläche Zusatzelemente für die Verladeschiene anbieten, die günstigenfalls ohne thermisch belastende Verbindungen angebracht zu werden vermögen.

Zur Lösung dieser Aufgabe führt die Lehre des unabhängigen Patentanspruches, die Unteransprüche geben günstige Weiterbildungen an.

Erfindungsgemäß ist die Führungsbahn für die Verladeschiene, in der letztere unter der Ladefläche in Längsrichtung verschieblich -- insbesondere verfahrbar -gelagert ist, von Profilen gebildet, die einander unter der Ladefläche in Abstand gegenüberstehen und zueinandergekehrte Führungsflächen für Gegenelemente der Verladeschienen aufweisen; diese Gegenelemente -- bevorzugt an der Verladeschiene vorgesehene Laufrollen -- werden auf jene Führungsflächen aufgesetzt und sind darauf verschiebbar bzw. abrollbar.

Nach einem weiteren Merkmal der Erfindung weist die Verladeschiene beidseits jeweils wenigstens eine an einer Achse drehbare Laufrolle als Gegenelement für die Führungsfläche/n auf. Für diese besondere Ausstattung der Verladeschiene mit Laufrollen wird gesondert Schutz begehrt. Dazu hat es sich als günstig erwiesen, den Durchmesser der Laufrollen als größte Höhe für die Verladeschiene zu wählen, um die Bauhöhe der die Führungsfläche anbietenden Profile so gering wie möglich halten zu können.

Das Strangpreßprofil weist vorteilhafterweise in Abstand voneinander durch wenigstens eine Platte verbundene Kastenholme, also Hohlprofilsabschnitte, auf zur Lagerung der Rollenachsen der Laufrollen.

Es liegt im Rahmen der Erfindung, daß das die Führungsfläche anbietende Profil ein einseitig offenes Kastenprofil ist, dessen Untergurt als freier Horizontalschenkel die Führungsfläche anbietet.

In einer erfindungsgemäßen Ausgestaltung ist das einseitig offene Kastenprofil Teil eines die Ladefläche begrenzenden Randprofils, dem eine ihm zugekehrte lösbare Führungsfläche gegenüberstehen kann. Dieses Randprofil kann fester Teil des Fahrzeuges oder an ihm lösbar angebracht sein. Im letztgenannten Falle ist das Randprofil -- wie auch das lösbare Kastenprofil -- an der Ladefläche durch wenigstens eine Klemmgarnitur gehalten.

In einer weiteren Ausgestaltung kann die Führungsfläche von einem lösbar an einem Längsträger des Fahrzeuges angebrachten Profil gebildet werden, bevorzugt einem Winkel- oder einem Doppelwinkelprofil, dessen einer Endschenkel mit dem Längsträger verschraubt oder in anderer weise demontierbar verbunden ist.

Auch dieser Längsträger wird vorteilhafterweise an der Ladefläche durch wenigstens eine Klemmgarnitur abnehmbar gehalten. Diese Klemmgarnitur umfaßt erfindungsgemäß zumindest einen in eine hinterschnittene Nut des Fahrzeugs einsetzbaren Nutenstein sowie ein an diesen durch eine Schraube od.dgl. Verbindungsorgan angeschlossenes Klemmstück, mit dem das Profil oder der Längsträger klemmend an die Unterseite der Ladefläche gepreßt wird - jegliche thermische Beeinflussung durch Schweißarbeiten kann so vermieden werden.

Bevorzugt untergreift das Klemmstück mit einer leistenartigen Klemmnase eine Nasenleiste des Kastenprofils oder einen Flansch jenes Längsträgers. Der Längsträger ist erfindungsgemäß ein Strangpreßprofil, das querschnittlich einen Abschnitt in Form eines T-Stückes aus Firstflansch und Steg umfaßt sowie einen an letzteren einseitig angeformten Seitenschenkel. Das Winkel- oder Doppelwinkelprofil ist mit dem Endschenkel an jenen Steg des Längsträgers angeschraubt, also ebenfalls lösbar.

Zur sicheren Festlegung des Winkel- oder Doppelwinkelprofils ist dafür aus dem Steg eine Längsrippe als Anschlag herausgeformt. Der besseren Rollenführung wegen ist schließlich die Führungsfläche an ihrer offenen Längsseite mit einem von ihr aufragenden Endschenkel als Führungsanschlag für die Laufrolle der Verladeschiene versehen, mit dem gegebenenfalls noch ein ihm gegenüber stehender Gegenschenkel fluchtet.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: die Seitenansicht eines Nutzfahrzeuges mit Ladefläche;
- Fig. 2:: die Darstellung der Fig. 1 mit veränderter Position der Ladefläche;
- Fig. 3:: den Längsschnitt durch eine gegenüber Fig. 1,2 vergrößerte Bodenplanke der Ladefläche;
- Fig. 4:: eine Schrägsicht unter die Ladefläche;
- Fig. 5:: Details der Fig. 4 in Schrägsicht;
- Fig. 6 bis Fig. 8:: Stirnansichten unterschiedlichen Maßstabes von an der Ladefläche angeordneten stranggepreßten Profilen;
- Fig. 9,13:: zwei verschiedene Teilrückenansichten der Ladefläche mit Verladeschienen;
- Fig. 10:: eine Seitenansicht einer Verladeschiene;
- Fig. 11:: eine Schrägsicht auf ein Teil einer Verladeschiene;
- Fig. 12:: ein Detail der Fig. 9 nach deren Pfeil XII in vergrößerter Schrägsicht;
- Fig. 14:: eine Teilrückenansicht zu einer anderen Ladefläche.

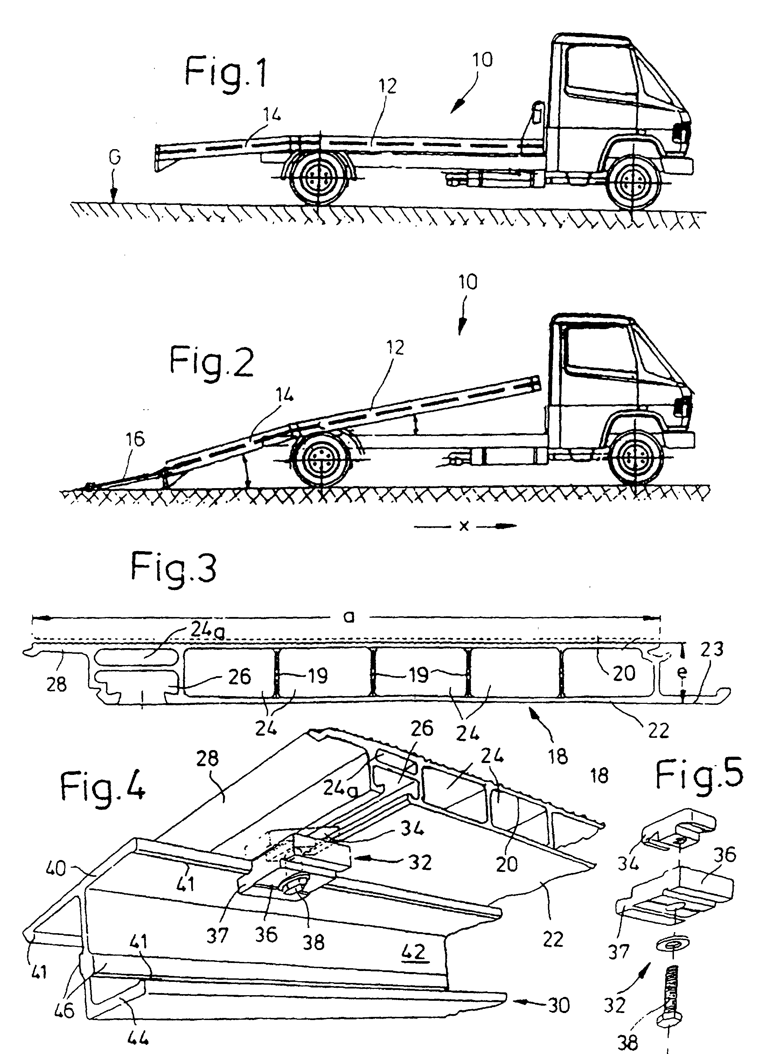

Ein Nutzfahrzeug 10 ist beispielsweise für den Transport von in der Zeichnung vernachlässigten Personenkraftwagen mit einer kippbaren Ladefläche 12 ausgestattet, unter deren Heckende 14 Verladeschienen 16 verlaufen. Diese sind in Fig. 2 in axial ausgezogenem Zustand angedeutet, in dem sie dem Fahrgrund G aufliegen.

Die Ladefläche 12 weist stranggepreßte Bodenplanken 18 auf, von denen eine vergrößert in Fig. 3 dargestellt ist. Einen Obergurt 20 der Länge a von 300 mm und der Dicke e von 30 mm verbinden mehrere Querwände 19 mit einem Untergurt 22, der frontwärts eine Zunge 23 bildet. Der Obergurt 20 übergreift mehrere -- von jenen Querwänden 19 begrenzte --Kammern 24 sowie eine hinterschnittene Einsatznut 26 mit über ihr angeordneter schlitzartiger Kammer 24ₐ. Von dieser kragt eine Heckzunge 28 als freies Ende des Obergurtes 20 ab.

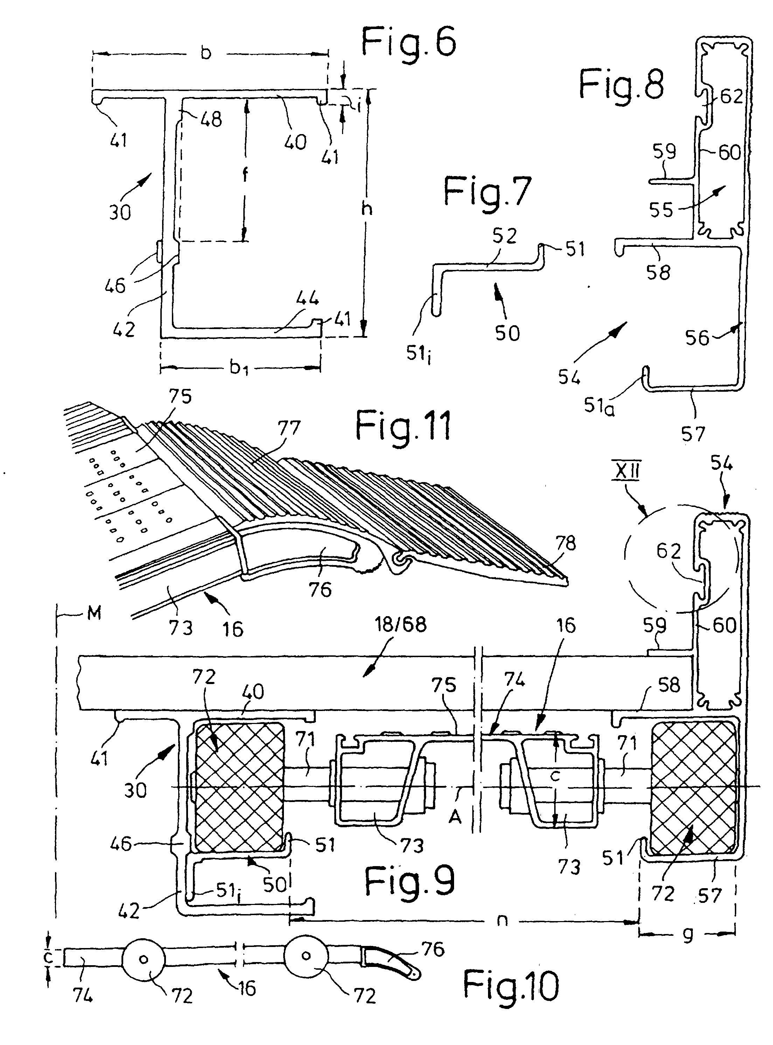

In Fig. 4 liegt dem Untergurt 22 der Bodenplanke 18 außenseitig ein aus einer Aluminiumlegierung stranggepreßter Längsträger 30 der Höhe h von hier 120 mm an, der mittels einer Klemmgarnitur 32 an der Bodenplanke 18 lösbar befestigt ist. Diese Klemmgarnitur 32 besteht aus einem in die hinterschnittene Einsatznut 26 eingeführten Nutenstein 34 und einem der Außenfläche des Untergurtes 22 bzw. der Unterseite der Ladefläche 12 anliegenden Klemmstück 36, das mit dem Nutenstein 34 durch eine Schraube 38 verbunden ist. Eine Klemmnase 37 des Klemmstücks 36 untergreift einen -- dem Untergurt 22 der Bodenplanke 18 anliegenden -- Firstflansch 40 des Längsträgers 30 und preßt ihn an den Untergurt 22.

Jener Firstflansch 40 der Querschnittslänge b von 110 mm bildet mit einem Steg 42 des Längsträgers 30 ein T-Stück, an das am freien Ende des Steges 42 ein einseitig abragender Schenkel 44 der Länge b₁ von hier 74 mm angeformt ist. Der Firstflansch 40 des Längsträgers 30 ist an seinen beiden Querschnittsenden mit -- abwärts vorstehenden -- Randleisten 41 unterschiedlicher Höhen i versehen.

Fig. 6 verdeutlicht, daß der Steg 42 querschnittlich außermittig am Firstflansch 40 angeordnet ist; der -- hier rechte -- längere Flanschabschnitt entspricht dabei dem parallelen unteren Schenkel 44, der seinerseits eine aufragende Randleiste 41 anbietet; diese fluchtet mit der entsprechenden Randleiste 41 des Firstflansches 40.

In Abstand f von etwa 70 mm sind unterhalb des Firstflansches 40 aus dem Steg 42 beidseits Längsrippen 46 herausgeformt. Die auf der Schenkelseite verlaufende Längsrippe 46 fluchtet mit einer Ausformung 48 am Übergang des Steges 42 in den Firstflansch 40 und dient als Anschlag für ein Doppelwinkelprofil 50 etwa S-förmiger Querschnittsform, das in Fig. 9,11 in angeschraubtem Zustand skizziert ist; in diesem liegt ein innerer Endschenkel 51₁ dem Steg 42 des Längsträgers 30 an, während der am anderen Ende eines Verbindungssteges 52 aufragende kürzere andere Endschenkel 51 zum Firstflansch 40 hin zeigt.

In Fig. 8 ist ein stranggepreßtes -- in Einbaulage rechtes -- Randprofil 54 für die Ladefläche 12 wiedergegeben, das sich aus einem oberen Kastenteil 55, einem daran nach unten angeformten Winkelstück 56 mit freiem Horizontalschenkel 57 der beispielsweisen Querschnittslänge g von 56 mm, einer dazu parallel vom unteren Ende des Kastenprofils 55 abragenden Profilzunge 58 und einem zu letzterer in Abstand parallel gleichgerichteten Zungenleiste 59 zusammensetzt. In den oberen Bereich der zur Ladefläche 12 weisenden Innenwand 60 des Kastenteils 55 ist eine hinterschnittene Längsnut 62 mit -- gemäß Fig. 10 -- gewellten Nutenkanten 63 eingeformt. In der Art eines sog. Airline-Systems ist in der Längsnut 62 ein Rasteinsatz 64 eines Zurrgurtes 66 verschiebbar.

Zwischen die Profilzunge 58 und die parallele Zungenleiste 59 ist in das Randprofil 54 der Fig. 9 eine Plattform 68 mit der beschriebenen Bodenplanke 18 eingeschoben, von der nach unten hin der Längsträger 30 mit angeschraubtem Doppelwinkelprofil 50 abragt. Des letzteren freier Endschenkel 52 steht zu einem entsprechenden Endschenkel 52 des Horizontalschenkels 57 des Randprofils 54 in einem Abstand n, der so bemessen ist, daß die durch eine Gerade M angedeutete Fahrzeugmitte außerhalb der Profilpaarung 50/54 verläuft. Letztere nimmt die Verladeschiene 16 bzw. beidseits dieser an Achsen 71 abragende Laufrollen 72 auf. Die Rollenachsen 71 lagern in seitlichen Kastenholmen 73 eines Strangpreßprofils 74 der Höhe c; die beiden Kastenholme 73 sind durch eine angeformte Platte 75 verbunden.

An die Kastenholme 73 des Strangpreßprofils 74 sind einends hornartige Endstücke 76 angeschlossen als Teil einer gekrümmten Auffahrfläche 77. In Fig. 11 ist an letztere noch ein Schwenkflügel 78 angelenkt.

Vor allem Fig. 9 läßt erkennen, daß die Achslinie A der Rollenachsen 71 das Strangpreßprofil 74 der Verladeschiene 16 etwa in dessen halber Höhe c durchsetzt und diese Höhe c kürzer ist als der Durchmesser d der Laufrollen 72; letztere bestimmen somit die größte Höhe der Verladeschiene 16.

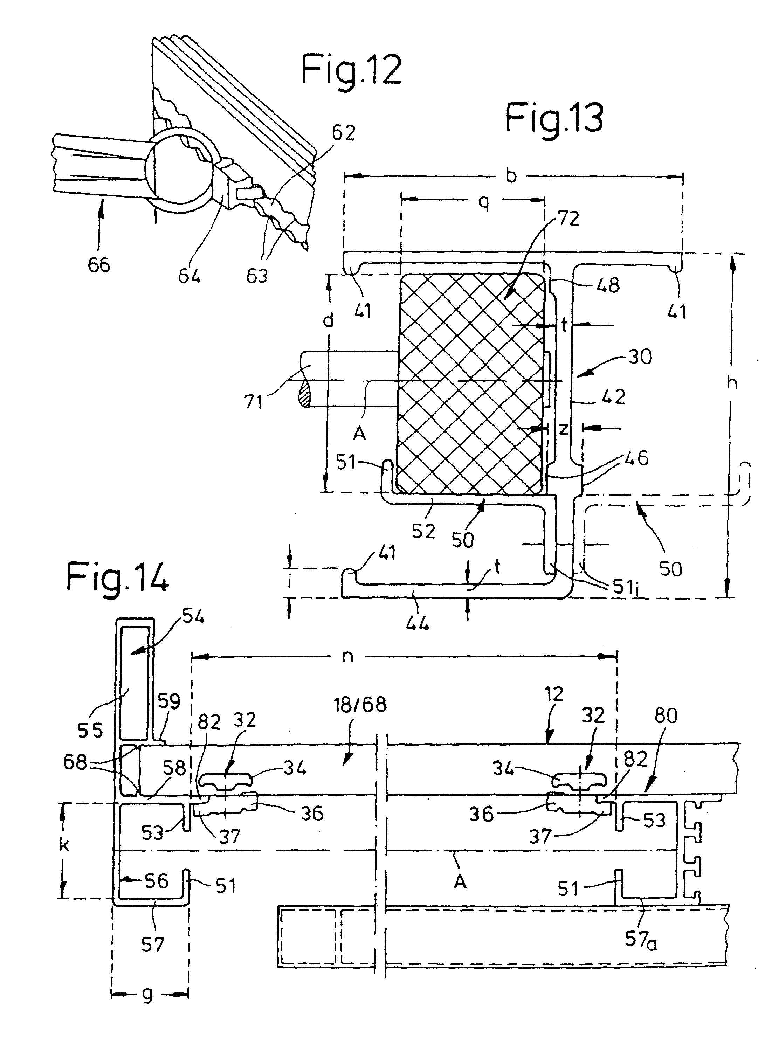

Die Maße des Winkelstücks 56 nach Fig. 9,14 bzw. des Längsträgers 30 samt Doppelwinkelprofil 50 gemäß Fig. 13 sind -hier für die zweite Verladeschiene 16 des Nutzfahrzeuges 10 -- den Laufrollen 72 des Durchmessers d von 75 mm und der Breite q von 47 mm angepaßt. Die Schenkel- und Stegdicke t mißt 5 mm, die Dicke z der Verdickung durch die beiden Längsrippen 46 hier 11 mm.

Bei der Ausführung nach Fig. 14 steht an der Plattform 68 bzw. der Bodenplanke 18 dem -- hier linken -- mittels einer Klemmgarnitur 32 angeschlossenen Winkelstück 56 der Höhe k von hier 77 mm in Abstand n von 430 mm ein Kastenprofil 80 gegenüber, das ebenfalls von einer Klemmgarnitur 32 gehalten wird. Auch dieses bildet mit einem Horizontalschenkel 57ₐ mit angeformtem Endschenkel 51 sowie einem mit letzterem fluchtenden Gegenschenkel 53 eine Aufnahme für jene Laufrollen 72. Die Klemmnase 37 des Klemmstückes 36 untergreift hier eine Nasenleiste 82 des Kastenprofils 80.

Nicht dargestellt ist eine Antriebseinheit für die Verladeschiene/n, die deren gesteuerte Lageveränderung erlaubt.

## Patentansprüche

1. Ladefläche eines Nutzfahrzeuges mit wenigstens einer einends an ihr abstützbaren Verladeschiene als Auffahrhilfe für Lasten, wobei der Ladefläche wenigstens eine Führungsbahn zugeordnet ist und die Führungsbahn von Profilen (50, 56, 80) gebildet ist, die einander unter der Ladefläche (12) in Abstand (n) gegenüberstehen und zueinandergekehrte Führungsflächen (52, 57, 57a) für Gegenelemente (72) der Verladeschiene (16) aufweisen, und die Verladeschiene unter der Ladefläche in der durch die Profile gebildeten Führungsbahn in Längsrichtung der Ladefläche bewegbar angeordnet ist, und das die Führungsfläche (57, 57a) aufweisende Profil (56,80) ein einseitig offenes Kastenprofil ist, dessen Untergurt als freier Horizontalschenkel (57, 57a) die Führungsfläche anbietet, oder das die Führungsfläche (52) ausbildende Profil (50) lösbar an einem Längsträger (30) des Fahrzeugs (10) angebracht ist,
**dadurch gekennzeichnet, daß**
das offene Kastenprofil (56,80) oder der Längsträger (30) an der Ladefläche (12) durch wenigstens eine Klemmgarnitur (32) lösbar gehalten ist und die Klemmgarnitur zumindest einen in eine hinterschnittene Nut (26) der Ladefläche (12) einsetzbaren Nutenstein (34) sowie ein an dieses durch ein Verbindungsorgan (38) angeschlossenes Klemmstück (36) aufweist, mit dem das offene Kastenprofil (56, 80) oder der Längsträger (30) an der Unterseite (22) der Ladefläche (12) klemmend und lösbar gehalten ist.

2. Ladefläche nach Anspruch 1, **dadurch gekennzeichnet, daß** die Verladeschiene (16) beidseits wenigstens jeweils eine an einer Achse (70) drehbare Laufrolle (72) aufweist, die beide als Gegenelemente den Führungsflächen (52, 57, 57ₐ) zugeordnet sind.

3. Ladefläche nach Anspruch 2, **dadurch gekennzeichnet, daß** der Durchmesser (d) der Laufrollen (72) die größte Höhe der Verladeschiene (16) bestimmt und die Höhe (c) von deren Profil/en (74), insbesondere von deren Strangpreßprofil/en, kürzer ist als jener Durchmesser.

4. Ladefläche nach einem der Ansprüche 1 bis 3, **dadurch gekennzeichnet, daß** die Verladeschiene (16) zwischen den als Strangpreßprofil ausgebildeten Profilen (50, 56, 80) bewegbar angeordnet ist.

5. Ladefläche nach Anspruch 3 oder 4, **dadurch gekennzeichnet, daß** das Strangpreßprofil (74) der Verladeschiene (16) in Abstand voneinander durch wenigstens eine Platte (75) verbundene Kastenholme aufweist, in denen die Rollenachsen (70) der Laufrollen (72) gelagert sind.

6. Ladefläche nach Anspruch 1, **dadurch gekennzeichnet, daß** das einseitig offene Kastenprofil (56) Teil eines die Ladefläche (12) begrenzenden Randprofils (54) ist.

7. Ladefläche nach Anspruch 6, **dadurch gekennzeichnet, daß** dem Randprofil (54) eine ihm zugekehrte lösbare Führungsfläche (52,57ₐ) gegenübersteht.

8. Ladefläche nach Anspruch 1, **dadurch gekennzeichnet, daß** das Profil ein Winkel- oder ein Doppelwinkelprofil (50) ist, dessen einer Endschenkel (51₁) mit dem Längsträger (30) verschraubt oder verklemmt ist.

9. Ladefläche nach Anspruch 1, **dadurch gekennzeichnet, daß** das Klemmstück (36) mit einer leistenartigen Klemmnase (37) eine Nasenleiste (82) des Kastenprofils (56,80) oder einen Flansch (40) des Längsträgers (30) untergreift.

10. Ladefläche nach Anspruch 1, **dadurch gekennzeichnet, daß** der Längsträger (30) ein Strangpreßprofil ist, das sich querschnittlich aus einem T-Stück aus Firstflansch (40) und Steg (42) sowie wenigstens einem an letzteren angeformten Seitenschenkel (44) zusammensetzt.

11. Ladefläche nach Anspruch 8 und 10, **dadurch gekennzeichnet, daß** das Winkel- oder Doppelwinkelprofil (50) mit dem Endschenkel (51₁) an den Steg (42) des Längsträgers (30) angeschraubt ist.

12. Ladefläche nach Anspruch 11, **dadurch gekennzeichnet, daß** aus dem Steg (42) eine Längsrippe (46) als Anschlag für das Winkel- oder Doppelwinkelprofil (50) herausgeformt ist.

13. Ladefläche nach wenigstens einem der Ansprüche 1 bis 12, **dadurch gekennzeichnet, daß** die Führungsfläche (52,57,57ₐ) an ihrer offenen Längsseite von einem von ihr aufragenden Endschenkel (51) als Führungsanschlag für Laufrollen (72) der Verladeschiene (16) begrenzt ist.

14. Ladefläche nach Anspruch 13, **dadurch gekennzeichnet, daß** mit dem Endschenkel (51) ein in Abstand vorgesehener Gegenschenkel (53) des die Führungsbahn vorsehenden (56,80) etwa fluchtet.

15. Ladefläche nach wenigstens einem der Ansprüche 1 bis 14, **dadurch gekennzeichnet, daß** die Verladeschiene (16) mit einer Antriebseinheit ausgestattet ist.

## Claims

1. Loading area of a commercial vehicle, comprising at least one loading ramp which can be supported at one end thereof serving as a loading aid, at least one guideway being associated with the loading area and the guideway being formed by sections (50, 56, 80) situated opposite one another under the loading area (12) at a distance (n) from one another and comprising guide surfaces (52, 57, 57a) for mating elements (72) of the loading ramp (16) directed towards one another, the loading ramp being arranged under the loading area in such a manner that it is movable in the guideway formed by the sections in the longitudinal direction of the loading area, and the section (56, 80) comprising the guide surface (57, 57a) being a box section open at one side, its bottom boom in the form of a free horizontal leg (57, 57a) providing the guide surface or the section (50) forming the guide surface (52) being removably mounted on a longitudinal member (30) of the vehicle (10), **characterised in that** the open box section (56, 80) or the longitudinal member (30) is removably held on the loading area (12) by means of at least one clamping set (32) and the clamping set comprises at least one sliding block (34) which can be inserted into an undercut groove (26) in the loading area (12) and a clamping piece (36) which is connected thereto by means of a connecting element (38) and by means of which the open box section (56, 80) or the longitudinal member (30) is removably clamped to the underside (22) of the loading area (12).

2. Loading area according to claim 1, **characterised in that** the loading ramp (16) is provided on either side with at least one roller (72) rotatable about an axle (70), each associated with the guide surfaces (52, 57, 57ₐ) in the form of mating elements.

3. Loading area according to claim 2, **characterised in that** the diameter (d) of the rollers (72) determines the maximum height of the loading ramp (16) and the height (c) of their section(s) (74), in particular their extruded section(s), is shorter than the said diameter.

4. Loading area according to one of claims 1 to 3, **characterised in that** the loading ramp (16) is movably arranged between the sections (50, 56, 80) in the form of extruded sections.

5. Loading area according to claim 3 or claim 4, **characterised in that** the extruded section (74) of the loading ramp (16) comprises box spars connected together at a distance from one another by means of at least one plate (75) and in which the axles (70) of the rollers (72) are mounted.

6. Loading area according to claim 1, **characterised in that** the box section (56) open at one side is part of an edge section (54) delimiting the loading area (12).

7. Loading area according to claim 6, **characterised in that** a removable guide surface (52, 57ₐ) is situated opposite and directed towards the edge section (54).

8. Loading area according to claim 1, **characterised in that** the section is an angle section or double angle section (50), one end leg (51₁) of which is screwed or wedged on to the longitudinal member (30).

9. Loading area according to claim 1, **characterised in that** the clamping piece (36) engages bellow a projection strip (82) of the box section (56, 80) or a flange (40) of the longitudinal member (30) by means of a strip-shaped clamping projection (37).

10. Loading area according to claim 1, **characterised in that** the longitudinal member (30) is an extruded section composed in cross section of a T-piece consisting of a top flange (40) and a web (42) and at least one side leg (44) moulded on to the latter.

11. Loading area according to claim 8 and claim 10, **characterised in that** the angle section or double angle section (50) is screwed on to the web (42) of the longitudinal member (30) by means of the end leg (51₁).

12. Loading area according to claim 11, **characterised in that** a longitudinal rib (46) serving as a stop for the angle section or double angle section (50) is formed from the web (42).

13. Loading area according to at least one of claims 1 to 12, **characterised in that** the guide surface (52, 57, 57ₐ) is delimited on its open longitudinal side by an end leg (51) projecting therefrom serving as a guide stop for rollers (72) of the loading ramp (16).

14. Loading area according to claim 13, **characterised in that** a mating leg (53) of the box section (56, 80) providing the guideway provided at a distance from the end leg (51) is substantially aligned therewith.

15. Loading area according to at least one of claims 1 to 14, **characterised in that** the loading ramp (16) is provided with a drive unit.

## Revendications

1. Plate-forme de chargement d'un véhicule utilitaire avec au moins une rampe de chargement pouvant s'appuyer par une extrémité sur celle-ci pour faciliter l'amenée de charges, au moins une voie de guidage étant affectée à la plate-forme de chargement et la glissière de guidage étant constituée de profilés (50, 56, 80) qui se font mutuellement face à écartement (n) en dessous de la plate-forme de chargement (12) et présentent des surfaces de guidage (52, 57, 57a) se faisant face pour des éléments correspondants (72) de la rampe de chargement (16), et la rampe de chargement étant disposée en dessous de la plate-forme de chargement dans la voie de guidage formée par les profilés de manière à être mobile en direction longitudinale de la plate-forme de chargement, et le profilé (56, 80) présentant la surface de guidage (57, 57a) étant un profilé en caisson ouvert d'un côté, dont la membrure inférieure propose la surface de guidage en tant que jambe horizontale (57, 57a), ou le profilé (50) formant la surface de guidage (52) étant fixé de manière amovible à un longeron (30) du véhicule (10),
**caractérisé en ce que**
le profilé en caisson ouvert (56, 80) ou le longeron (30) est attaché de manière amovible à la plate-forme de chargement (12) par au moins un dispositif de serrage (32) et le dispositif de serrage présente au moins un coulisseau (34) s'insérant dans une gorge en contre-dépouille (26) de la plate-forme de chargement (12) ainsi qu'une pièce de serrage (36) se raccordant à celui-ci par un organe de liaison (38), avec laquelle le profilé en caisson ouvert (56, 80) ou le longeron (30) est maintenu par serrage et de manière amovible à la face inférieure (22) de la plate-forme de chargement (12).

2. Plate-forme de chargement suivant la revendication 1, **caractérisée en ce que** la rampe de chargement (16) présente de chaque côté au moins un galet de roulement (72) tournant autour d'un axe (70), les deux galets de roulement étant affectés aux surfaces de guidage (52, 57, 57a) comme éléments correspondants.

3. Plate-forme de chargement suivant la revendication 2, **caractérisée en ce que** le diamètre (d) des galets de roulement (72) détermine la plus grande hauteur de la rampe de chargement (16) et **en ce que** la hauteur (c) de son (ou de ses) profilé(s) (74), en particulier de son (ou de ses) profilé(s) extrudés, est plus courte que ce diamètre.

4. Plate-forme de chargement suivant l'une des revendications 1 à 3, **caractérisée en ce que** la rampe de chargement (16) est disposée de manière mobile entre les profilés (50, 56, 80) formés comme profilés extrudés.

5. Plate-forme de chargement suivant la revendication 3 ou 4, **caractérisée en ce que** le profilé extrudé (74) de la rampe de chargement (16) présente des longerons-caissons reliés à distance entre eux par au moins une plaque (75), dans lesquels les axes (70) des galets de roulement (72) sont montés sur paliers.

6. Plate-forme de chargement suivant la revendication 1, **caractérisée en ce que** le profilé en caisson ouvert d'un côté (56) fait partie d'un profilé de bordure (54) délimitant la plate-forme de chargement (12).

7. Plate-forme de chargement suivant la revendication 6 , **caractérisée en ce qu'**une surface de guidage (52, 57a) faisant face au profilé de bordure (54) se trouve en face de celui-ci.

8. Plate-forme de chargement suivant la revendication 1, **caractérisée en ce que** le profilé est une cornière en L ou en U (50), dont une jambe d'extrémité (51a) est vissée avec le longeron (30) ou serrée sur celui-ci.

9. Plate-forme de chargement suivant la revendication 1, **caractérisée en ce que** la pièce de serrage (36) fait prise par en dessous avec un nez de serrage (37) en forme de listel sur un talon en forme de nez (82) du profilé en caisson (56, 80) ou une aile (40) du longeron (30).

10. Plate-forme de chargement suivant la revendication 1, **caractérisée en ce que** le longeron (30) est un profilé extrudé, qui est composé en section d'une pièce en T constituée d'une aile horizontale (40) et d'une aile verticale (42) ainsi que d'au moins une aile latérale (44) formée sur cette dernière.

11. Plate-forme de chargement suivant les revendications 8 et 10, **caractérisée en ce que** la cornière en L ou en U (50) est vissée par la jambe d'extrémité (51a) à l'aile verticale (42) du longeron (30).

12. Plate-forme de chargement suivant la revendication 11, **caractérisée en ce qu'**une nervure longitudinale (46) est formée dans l'aile verticale (42) comme butée pour la cornière en L ou en U (50).

13. Plate-forme de chargement suivant l'une au moins des revendications 1 à 12, **caractérisée en ce que** la surface de guidage (52, 57, 57a) est limitée sur son long côté ouvert par une jambe d'extrémité (51) dépassant de celle-ci comme butée de guidage pour des galets de roulement (72) de la rampe de chargement (16).

14. Plate-forme de chargement suivant la revendication 13, **caractérisée en ce qu'**une jambe opposée (53) prévue à distance des profilés (56, 80) formant la voie de guidage est à peu près alignée avec la jambe d'extrémité (51).

15. Plate-forme de chargement suivant au moins l'une des revendications 1 à 14, **caractérisée en ce que** la rampe de chargement (16) est équipée d'un groupe d'entraînement.
